# EUROPÄISCHE PATENTSCHRIFT

(11) **EP 3 049 232 B1**
(45) Veröffentlichungstag und Bekanntmachung des Hinweises auf die Patenterteilung: **21.03.2018**
(21) Anmeldenummer: 14761308.7
(22) Anmeldetag: 02.09.2014
(51) Int. Cl.: B29C 47/08, B29C 47/40, B29C 47/66

(54) **VERSCHLEISSKÖRPER ZUR AUFNAHME EINER DOPPELSCHNECKE ZUR EXTRUSION VON SCHMELZFÄHIGEM MATERIAL**
WEAR BODY FOR RECEIVING TWIN-SCREWS TO EXTRUDE FUSABLE MATERIAL
DOUILLE D'USURE DESTINEE À REÇEVOIR DES DOUBLE-VIS POUR EXTRUDER DE MATIÈRE FUSIBLE

(30) Priorität: 26.09.2013 DE 102013110671
(43) Veröffentlichungstag der Anmeldung: 03.08.2016
(73) Patentinhaber: KraussMaffei Berstorff GmbH, 30625 Hannover (DE)
(72) Erfinder: SCHEEL, Gerhard, 30167 Hannover (DE); BEHLING, Michael, 31787 Hameln (DE)
(74) Vertreter: Roider, Stephan
(86) Internationale Anmeldenummer: PCT/EP2014/068557
(87) Internationale Veröffentlichungsnummer: WO 2015/043888

(56) Entgegenhaltungen:
- EP-A1- 2 017 062
- EP-A2- 0 426 101
- WO-A1-86/02313
- K-M HESS: "Fortschritte beim Herstellen gefüllter Kunststoffe", KUNSTOFFE, CARL HANSER VERLAG, MUNCHEN, DE, Bd. 73, Nr. 6, 1. Juni 1983 (1983-06-01), Seiten 282-286, XP002029464, ISSN: 0023-5563

## Beschreibung

Die Erfindung betrifft einen Verschleißkörper mit einer axialen Zwillingsbohrung zur Aufnahme einer Doppelschnecke zur Extrusion von schmelzfähigem Material, insbesondere Kunststoff. Die Erfindung betrifft außerdem einen Extrusionszylinder für einen Doppelschneckenextruder mit einem solchen Verschleißkörper sowie einen Doppelschneckenextruder mit einem solchen Extrusionszylinder.

Im Betrieb verursachen Doppelschnecken an dem sie umgebenden Material der Zwillingsbohrung einen hohen Verschleiß. Um nicht regelmäßig den gesamten Extrusionszylinder auswechseln zu müssen, wird, statt die Zwillingsbohrung direkt in dem Extrusionszylinder anzulegen, ein Verschleißkörper, auch Buchse genannt, mit der Zwillingsbohrung versehen und in den Extrusionszylinder eingeschoben. Wenn das Material der Zwillingsbohrung also entsprechend abgerieben ist, muss nur der Verschleißkörper, nicht jedoch der gesamte Extrusionszylinder, ausgewechselt werden. Bekannte Verschleißkörper mit einem kreisförmigen, rechteckigen oder stadionförmigen (zwei Halbkreise, die mit Geraden verbunden sind) Querschnitt neigen unter Belastung zur Bildung von Rissen, durch die beispielsweise Kühlwasser austreten kann, und/oder erfordern einen hohen Materialaufwand.

Der Erfindung liegt daher die Aufgabe zugrunde, einen solchen Verschleißkörper mit höherer Stabilität und gleichzeitig geringerem Materialbedarf bereitzustellen. Die WO 86/02313 A1 offenbart einen Verschleißkörper mit achtförmigem Querschnitt oder ovalem Querschnitt. Die EP 0 426 101 B1 offenbart ein Zylindergehäuse mit elliptischem Querschnitt und in die Achterbohrung aufgebrachter Verschieißschicht.

Diese Aufgabe wird mit einem Verschleißkörper mit den Merkmalen nach Anspruch 1 gelöst. Vorteilhafte Weiterbildungen sind in den Unteransprüchen beschrieben.

Der Erfindung liegt der Gedanke zugrunde, einen Verschleißkörper in Form eines geraden Zylinders mit einer axialen Zwillingsbohrung und mit einem ovalen radialen Querschnitt bereitzustellen. Die Außenkontur des radialen Querschnitts ist über den gesamten Umfang konvex gekrümmt und die Breite des Ovals auf einer ersten Symmetrieachse ist größer als die Höhe des Ovals auf einer zweiten Symmetrieachse, wobei die Symmetrieachsen senkrecht zueinander verlaufen und ihr Schnittpunkt auf der Extrusionsachse liegt.

Die zweite Symmetrieachse verläuft vorzugsweise zwischen den beiden, insbesondere parallelen, Kanälen bzw. Bohrungen der Zwillingsbohrung, also entlang des Überlappungsbereichs der Kanäle, in welchem die Schnecken ineinander greifen.

Vorzugsweise liegt das Verhältnis der Breite des Ovals zur Höhe des Ovals zwischen 1,3 und 1,6. Das Oval weist vier Kreisbögen auf, und zwar zwei zur ersten Symmetrieachse symmetrische erste Kreisbögen und zwei zur zweiten Symmetrieachse symmetrische zweite Kreisbögen, wobei der Radius der ersten Kreisbögen auf der zweiten Symmetrieachse liegt und der Radius der zweiten Kreisbögen auf der ersten Symmetrieachse. Dabei ist der Radius der ersten Kreisbögen größer als der Radius der zweiten Kreisbögen. Vorzugsweise liegt das Verhältnis des Radius der ersten Kreisbögen zum Radius der zweiten Kreisbögen zwischen 2,3 und 3,5. Es ist ferner bevorzugt, dass das Verhältnis des Radius der zweiten Kreisbögen zum Radius der Kanäle der Zwillingsbohrung vorzugsweise zwischen 1,25 und 1,55. Vorzugsweise schneidet der Radius der ersten Kreisbögen die erste Symmetrieachse. Dabei bilden die vier Kreisbögen ein geschlossenes Oval, d.h. die vier Kreisbögen schließen abwechselnd direkt aneinander an, so dass an den Kontaktpunkten der Kreisbögen ihre Radien aufeinander liegen. Der Winkel ihrer aufeinanderliegenden Radien zur zweiten Symmetrieachse liegt jeweils zwischen 15 ° und 25 °. Mit anderen Worten der Winkel zwischen der zweiten Symmetrieachse und einer durch den Mittelpunkt der ersten Kreisbögen und durch den Mittelpunkt der zweiten Kreisbögen verlaufenden Achse, liegt zwischen 15° und 25°.

Der Mittelpunkt der zweiten Kreisbögen, wobei der Radius sich bekanntermaßen vom Mittelpunkt zum Umfang erstreckt, kann auf verschiedenen Positionen entlang der ersten Symmetrieachse liegen. In einer bevorzugten Ausgestaltung liegt der Mittelpunkt der zweiten Kreisbögen jeweils auf dem Mittelpunkt der Kanäle der Zwillingsbohrung, insbesondere auf der gleichen Seite der zweiten Symmetrieachse.

In einer weiteren bevorzugten Ausgestaltung ist das Oval eine Ellipse, wobei die Hauptachse der Ellipse auf der ersten Symmetrieachse liegt und die Nebenachse der Ellipse auf der zweiten Symmetrieachse liegt. In diesem Fall entspricht der Durchmesser der ersten Kreisbögen der Höhe des Ovals und der Durchmesser der zweiten Kreisbögen der Breite des Ovals. Entsprechend der Definition einer Ellipse sind Kreisbögen in den Scheiteln der Ellipse punktförmig und durch eine Ellipsenbahn verbunden.

Es sind weitere Ausgestaltungen möglich, in denen das Oval elliptische und nicht elliptische Abschnitte aufweist.

Es ist außerdem bevorzugt, dass der Zylinder an einem axialen Ende einen radialen Vorsprung aufweist. Der Vorsprung ist von der Extrusionsachse nach außen gerichtet, vergrößert also den Querschnitt. Der Vorsprung kann vollständig umlaufend oder in Teilstücken, mindestens einem Teilstück, vorgesehen sein. Die radiale Höhe des Vorsprungs kann konstant oder variabel sein. Dieser Vorsprung erhöht die Stabilität des Zylinders und ermöglicht eine axiale Sicherung des Verschleißkörpers in dem ihn umgebenden Gehäuse.

Mit der erfindungsgemäßen Ausgestaltung des Verschleißkörpers wird nicht nur eine höhere Stabilität erreicht und Rissbildung vermieden, sondern auch der Materialaufwand verringert.

Die Erfindung wird nachfolgend anhand der Ausführungsbeispiele und unter Bezugnahme auf die Zeichnungen näher erläutert.
- Fig. 1a: zeigt einen ovalen Verschleißkörper in einer radialen Querschnittsansicht A-A.
- Fig. 1b: zeigt den ovalen Verschleißkörper gemäß Fig. 1a in der Schnittansicht B-B entlang einer Symmetrieachse.
- Fig. 1c: zeigt den ovalen Verschleißkörper gemäß Fig. 1a in der Schnittansicht C-C entlang einer anderen Symmetrieachse.
- Fig. 2a: zeigt einen elliptischen Verschleißkörper in einer radialen Querschnittsansicht A-A.
- Fig. 2b: zeigt den elliptischen Verschleißkörper gemäß Fig. 2a in der Schnittansicht B-B entlang einer Symmetrieachse.
- Fig. 2c: zeigt den elliptischen Verschleißkörper gemäß Fig. 2a in der Schnittansicht C-C entlang einer anderen Symmetrieachse.

In den nachfolgenden Ausführungen sind symmetrische Elemente und Bezugszeichen mitzulesen, auch wenn nicht überall explizit aufgeführt.

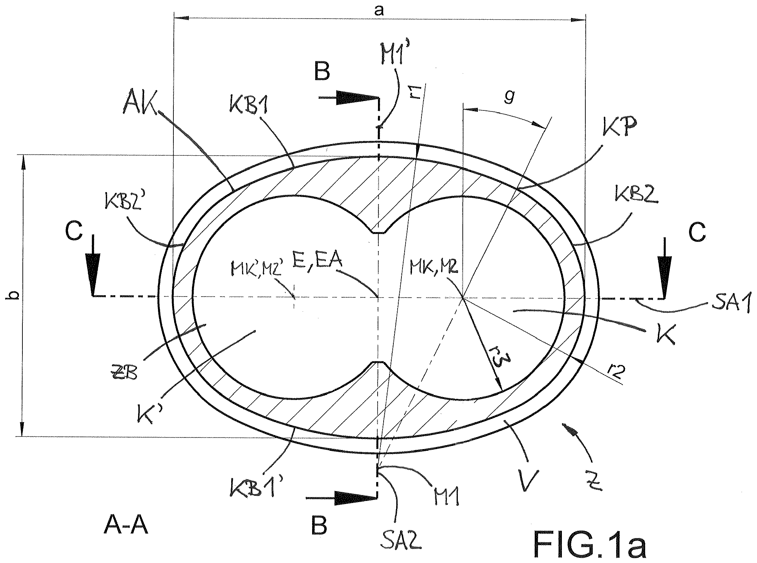

Fig. 1a zeigt den radialen Querschnitt eines ovalen Verschleißkörpers gemäß dem ersten Ausführungsbeispiel. Der Verschleißkörper ist axial als gerader Zylinder Z ausgestaltet und weist eine axiale Zwillingsbohrung ZB mit zwei axialen Kanälen bzw. Bohrungen K, K' auf. Die Zwillingsbohrung ZB ist achsensymmetrisch zu einer ersten Symmetrieachse SA1 und einer zweiten Symmetrieachse SA2. Die erste Symmetrieachse SA1 und die zweite Symmetrieachse SA2 stehen senkrecht zueinander und ihr Schnittpunkt E liegt auf der Extrusionsachse EA. Die zweite Symmetrieachse SA2 verläuft zwischen den Kanälen K, K'. Die Kanäle K, K' haben jeweils einen Radius r3, der sich von ihrem jeweiligen Mittelpunkt MK, MK' zu ihrem Umfang erstreckt.

Der radiale Querschnitt des Zylinders Z hat eine über den gesamten Umfang des Zylinders Z konvex gekrümmte Außenkontur AK mit zwei ersten Kreisbögen KB1, KB1' und zwei zweiten Kreisbögen KB2, KB2'. Die ersten Kreisbögen KB1, KB1' sind achsensymmetrisch zur ersten Symmetrieachse SA1. Die zweiten Kreisbögen KB2, KB2' sind achsensymmetrisch zur zweiten Symmetrieachse SA2.

Die ersten Kreisbögen KB1, KB1' haben einen Radius R1, der sich von ihrem jeweiligen Mittelpunkt M1, M1' bis zu ihrem Umfang auf der Außenkontur AK erstreckt. Die Mittelpunkte M1, M1' der ersten Kreisbögen KB1, KB1' liegen auf der zweiten Symmetrieachse SA2.

Die zweiten Kreisbögen KB2, KB2' haben einen Radius r2, der sich von ihrem jeweiligen Mittelpunkt M2, M2' bis zu ihrem Umfang auf der Außenkontur AK erstreckt. Die Mittelpunkte M2, M2' der zweiten Kreisbögen KB2, KB2' liegen auf der ersten Symmetrieachse SA1.

Der Radius r1 der ersten Kreisbögen KB1, KB1' ist größer als der Radius r2 der zweiten Kreisbögen. Der Radius r1 der ersten Kreisbögen KB1, KB1' schneidet die erste Symmetrieachse SA1.

Die ersten Kreisbögen KB1, KB1' und die zweiten Kreisbögen KB2, KB2' schließen abwechselnd direkt aneinander an und bilden ein geschlossenes Oval. An den Kontaktpunkten KP der jeweiligen Kreisbögen liegen ihre Radien r1, r2 aufeinander, d.h. die Mittelpunkte M1, M1' der ersten Kreisbögen KB1, KB1', die Mittelpunkte M2, M2' der zweiten Kreisbögen KB2, KB2' und die jeweiligen Kontaktpunkte KP bilden eine Achse. Diese Achse und die zweite Symmetrieachse SA2 spannen den Winkel g auf.

In diesem Ausführungsbeispiel liegen die Mittelpunkte M2, M2' der zweiten Kreisbögen KB2, KB2' jeweils auf den Mittelpunkten MK, MK' der Kanäle K, K'. In alternativen Ausführungsbeispielen sind die Mittelpunkte der Kanäle und die Mittelpunkte der zweiten Kreisbögen nicht deckungsgleich.

Der Zylinder Z hat eine radiale Breite a entlang der ersten Symmetrieachse SA1 und eine radiale Höhe b entlang der zweiten Symmetrieachse SA2. Die radiale Breite a ist größer als die radiale Höhe b.

Der Zylinder Z weist an einem axialen Ende einen radial nach außen gerichteten Vorsprung V auf. Der Vorsprung V erstreckt sich in diesem Ausführungsbeispiel um den gesamten Umfang des Zylinders Z. In alternativen Ausführungsbeispielen ist kein Vorsprung vorgesehen oder es ist nur ein abschnittsweiser Vorsprung und/oder eine variable Höhe des Vorsprungs vorgesehen.

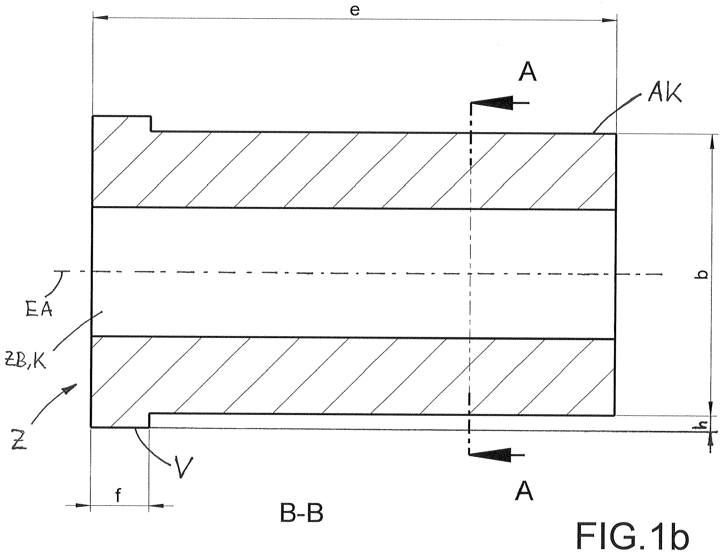

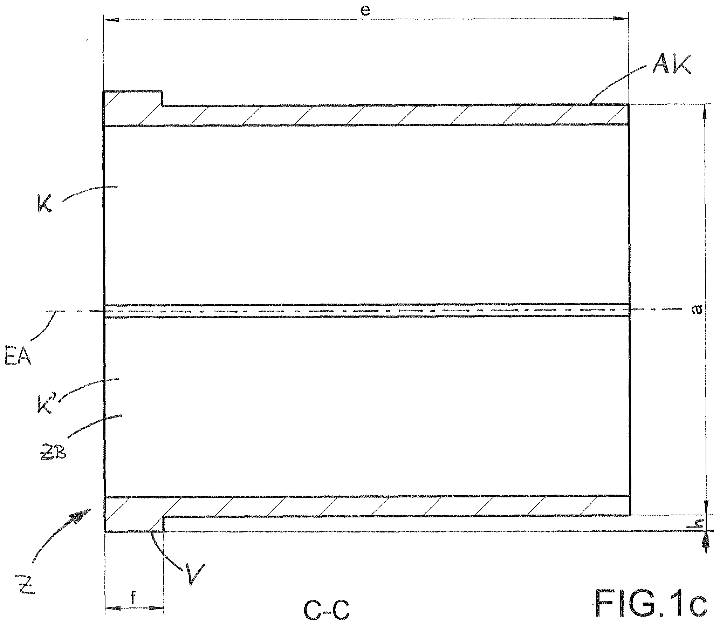

Fig. 1b zeigt den Verschleißkörper gemäß dem ersten Ausführungsbeispiel in der Schnittansicht B-B aus Fig. 1a, und Fig. 1c zeigt den Verschleißkörper gemäß dem ersten Ausführungsbeispiel in der Schnittansicht C-C aus Fig. 1a. Figuren 1b und 1c zeigen, dass der Zylinder Z eine axiale Länge e aufweist, während der Vorsprung V eine kürzere axiale Länge f aufweist. Der Vorsprung V hat zudem eine radiale Höhe h.

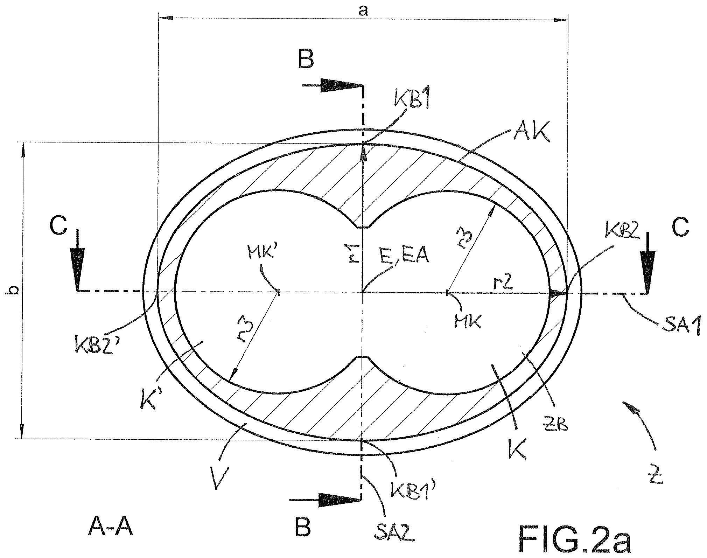

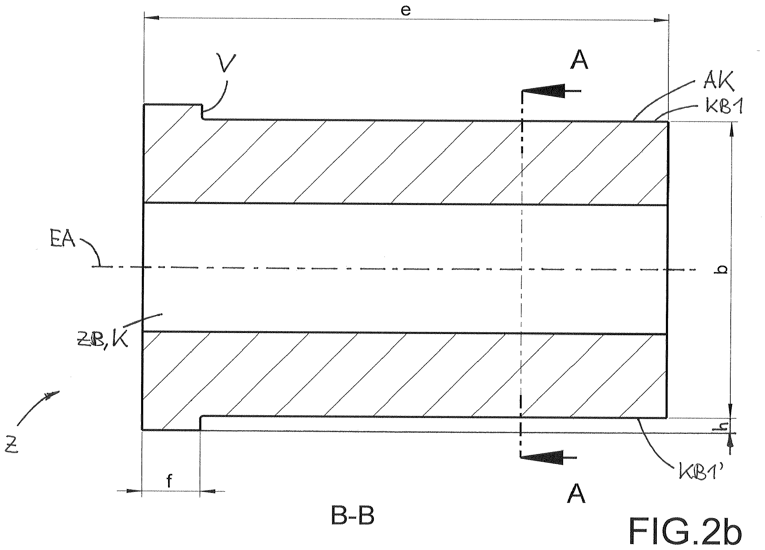

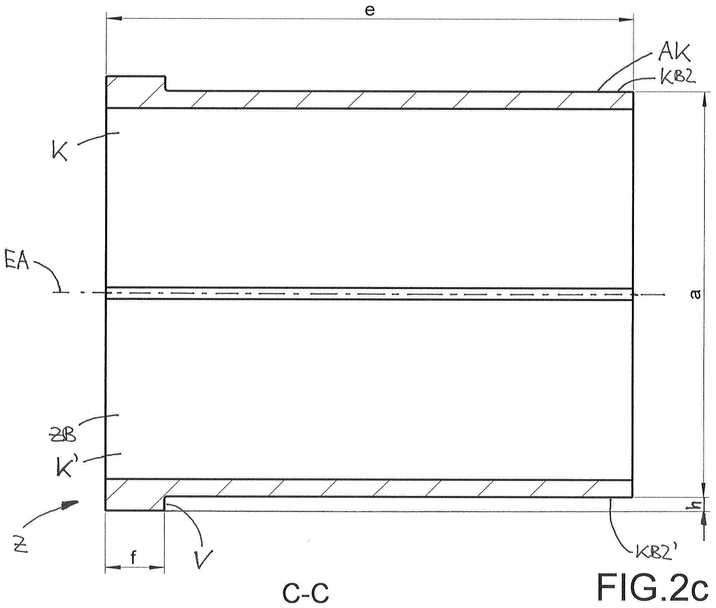

Figuren 2a, 2b und 2c zeigen einen Verschleißkörper gemäß einem zweiten Ausführungsbeispiel der Erfindung. Gleiche Elemente sind darin mit den gleichen Bezugszeichen versehen wie im ersten Ausführungsbeispiel (Figuren 1a, 1b und 1c). Die Erläuterungen zum ersten Ausführungsbeispiel gelten auch für das zweite Ausführungsbeispiel, sofern sie nicht den Nachfolgenden Erläuterungen widersprechen.

In diesem Ausführungsbeispiel hat der Zylinder Z einen elliptischen Querschnitt. Folglich sind die ersten und zweiten Kreisbögen KB1, KB1', KB2, KB2' jeweils punktförmig in den Scheiteln der Ellipse angeordnet und durch eine elliptische Bahn mit einander verbunden. Die Hauptachse der Ellipse liegt auf der ersten Symmetrieachse SA1. Die Nebenachse der Ellipse liegt auf der zweiten Symmetrieachse SA2. Die ersten Kreisbögen KB1, KB1 liegen auf einem Kreis, dessen Durchmesser der radialen Höhe b des Zylinders Z entspricht. Die zweiten Kreisbögen KB2, KB2' liegen ebenfalls auf einem Kreis, dessen Durchmesser der radialen Breite a des Zylinders Z entspricht. In diesem Ausführungsbeispiel ist der Radius r2 der zweiten Kreisbögen KB2, KB2' größer als der Radius r1 der ersten Kreisbögen KB1, KB1'.

Die Ausführungsbeispiele werden jeweils durch einen zum Verschleißkörper komplementären Gehäusekörper, einen Extrusionszylinder mit einem entsprechenden Verschleißkörper und/oder Gehäusekörper sowie einen Doppelschneckenextruder mit einem entsprechenden Extrusionszylinder ergänzt (nicht dargestellt).

### Bezugszeichenliste

- Z: Zylinder
- e: Länge des Zylinders
- ZB: Zwillingsbohrung
- K, K': Kanäle der Zwillingsbohrung
- AK: Außenkontur
- SA1: erste Symmetrieachse
- SA2: zweite Symmetrieachse
- E: Schnittpunkt der Symmetrieachsen
- EA: Extrusionsachse
- a: radiale Breite des Ovals/Zylinders
- b: radiale Höhe des Ovals/Zylinders
- KB1, KB1': erste Kreisbögen
- KB2, KB2': zweite Kreisbögen
- r1: Radius der ersten Kreisbögen
- r2: Radius der zweiten Kreisbögen
- r3: Radius der Kanäle der Zwillingsbohrung
- KP: Kontaktpunkt der jeweiligen Kreisbögen
- MK, MK': Mittelpunkt der Kanäle der Zwillingsbohrung
- M1, M1': Mittelpunkt der ersten Kreisbögen
- M2, M2': Mittelpunkt der zweiten Kreisbögen
- g: Winkel der Achse durch die jeweiligen Mittelpunkte der ersten und zweiten Kreisbögen zur zweiten Symmetrieachse SA2
- V: radialer Vorsprung
- f: Länge des Vorsprungs
- h: Höhe des Vorsprungs

## Patentansprüche

1. Verschleißkörper in Form eines geraden Zylinders (Z) mit einer axialen Zwillingsbohrung (ZB) zur Aufnahme einer Doppelschnecke zur Extrusion von schmelzfähigem Material, wobei der Zylinder (Z) einen radialen Querschnitt in Form eines Ovals und mit zwei senkrecht zueinander verlaufenden Symmetrieachsen (SA1, SA2), deren Schnittpunkt (E) auf der Extrusionsachse (EA) liegt, aufweist, wobei die Breite (a) des Ovals auf der ersten Symmetrieachse (SA1) größer ist als die Höhe (b) des Ovals auf der zweiten Symmetrieachse (SA2),
**dadurch gekennzeichnet, dass** der radiale Querschnitt in Form eines Ovals eine über den gesamten Umfang konvex gekrümmte Außenkontur (AK) aufweist, wobei das Oval zwei zur ersten Symmetrieachse (SA1) symmetrische erste Kreisbögen (KB1, KB1') und zwei zur zweiten Symmetrieachse (SA2) symmetrische zweite Kreisbögen (KB2, KB2') umfasst, wobei der Radius (r1) der ersten Kreisbögen (KB1, KB1') auf der zweiten Symmetrieachse (SA2) liegt und der Radius (r2) der zweiten Kreisbögen (KB2, KB2') auf der ersten Symmetrieachse (SA1) liegt, und wobei der Radius (r1) der ersten Kreisbögen (KB1, KB1') größer ist als der Radius (r2) der zweiten Kreisbögen (KB2, KB2'), wobei die vier Kreisbögen (KB1, KB1', KB2, KB2') ein geschlossenes Oval bilden, so dass an den Kontaktpunkten (KP) der Kreisbögen (KB1, KB1', KB2, KB2') ihre Radien (r1, r2) jeweils aufeinander liegen, wobei der Winkel g der aufeinander liegenden Radien (r1, r2) der Kreisbögen (KB1, KB1', KB2, KB2') zur zweiten Symmetrieachse (SA2) jeweils zwischen 15° und 25° liegt.

2. Verschleißkörper nach Anspruch 1, wobei die zweite Symmetrieachse (SA2) zwischen den beiden Kanälen (K, K') der Zwillingsbohrung (ZB) verläuft.

3. Verschleißkörper nach einem der vorhergehenden Ansprüche, wobei das Verhältnis der Breite (a) des Ovals zur Höhe (b) des Ovals zwischen 1,3 und 1,6 liegt.

4. Verschleißkörper nach einem der vorhergehenden Ansprüche, wobei das Verhältnis des Radius (r1) der ersten Kreisbögen (KB1, KB1') zum Radius (r2) der zweiten Kreisbögen (KB2, KB2') zwischen 2,3 und 3,5 liegt.

5. Verschleißkörper nach einem der vorhergehenden Ansprüche, wobei das Verhältnis des Radius (r2) der zweiten Kreisbögen (KB2, KB2') zum Radius (r3) der Kanäle (K, K') der Zwillingsbohrung (ZB) zwischen 1,25 und 1,55 liegt.

6. Verschleißkörper nach einem der vorhergehenden Ansprüche, wobei die Mittelpunkte (M2, M2') der zweiten Kreisbögen (KB2, KB2') auf den Mittelpunkten (MK, MK') der Kanäle (K, K') der Zwillingsbohrung (ZB) liegen.

7. Verschleißkörper nach einem der vorhergehenden Ansprüche, wobei das Oval eine Ellipse ist.

8. Verschleißkörper nach einem der vorhergehenden Ansprüche, wobei der Zylinder (Z) an einem axialen Ende einen radialen Vorsprung (V) aufweist.

9. Extrusionszylinder für einen Doppelschneckenextruder mit einem Verschleißkörper nach einem der Ansprüche 1 bis 8.

10. Doppelschneckenextruder mit einem Extrusionszylinder nach Anspruch 9.

## Claims

1. A wear body in the form of a straight cylinder (Z) with an axial twin bore (ZB) for receiving twin-screws to extrude fusable material, wherein the cylinder (Z) has a radial cross-section in the form of an oval and with two symmetry axes (SA1, SA2) running perpendicularly to one another, the intersection point (E) of which lies on the extrusion axis (EA), wherein the width (a) of the oval on the first symmetry axis (SA1) is greater than the height (b) of the oval on the second symmetry axis (SA2),
**characterized in that** the radial cross-section in the form of an oval has an outer contour (AK) which is convexly curved over the entire circumference,
wherein the oval comprises two first circular arcs (KB1, KB1') symmetrical to the first symmetry axis (SA1) and two second circular arcs (KB2, KB2') symmetrical to the second symmetry axis (SA2), wherein the radius (r1) of the first circular arcs (KB1, KB1') lies on the second symmetry axis (SA2) and the radius (r2) of the second circular arcs (KB2, KB2') lies on the first symmetry axis (SA1), and wherein the radius (r1) of the first circular arcs (KB1, KB1') is greater than the radius (r2) of the second circular arcs (KB2, KB2'), wherein the four circular arcs (KB1, KB1', KB2, KB2') form a closed oval, so that at the contact points (KP) of the circular arcs (KB1, KB1', KB2, KB2') their radii (r1, r2) lie respectively on one another, wherein the angle g of the radii (r1, r2), lying on one another, of the circular arcs (KB1, KB1', KB2, KB2') to the second symmetry axis (SA2) lies respectively between 15° and 25°.

2. The wear body according to claim 1, wherein the second symmetry axis (SA2) runs between the two channels (K, K') of the twin bore (ZB).

3. The wear body according to one of the preceding claims, wherein the ratio of the width (a) of the oval to the height (b) of the oval lies between 1.3 and 1.6.

4. The wear body according to one of the preceding claims, wherein the ratio of the radius (rt) of the first circular arcs (KB1, KB1') to the radius (r2) of the second circular arcs (KB2, KB2') lies between 2.3 and 3.5.

5. The wear body according to one of the preceding claims, wherein the ratio of the radius (r2) of the second circular arcs (KB2, KB2') to the radius (r3) of the channels (K, K') of the twin bore (ZB) lies between 1.25 and 1.55.

6. The wear body according to one of the preceding claims, wherein the centre points (M2, M2') of the second circular arcs (KB2, KB2') lie on the centre points (MK, MK') of the channels (K, K') of the twin bore (ZB).

7. The wear body according to one of the preceding claims, wherein the oval is an ellipse.

8. The wear body according to one of the preceding claims, wherein the cylinder (Z) has a radial projection (V) at an axial end.

9. An extrusion cylinder for a twin-screw extruder with a wear body according to one of claims 1 to 8.

10. A twin-screw extruder with an extrusion cylinder according to claim 9.

## Revendications

1. Douille d'usure en forme de cylindre droit (Z) comprenant un alésage jumelé axial (ZB), destinée à recevoir une double-vis pour extruder de la matière fusible, dans lequel le cylindre (Z) présente une section transversale radiale en forme d'ovale et avec deux axes de symétrie (SA1, SA2) verticaux entre eux dont le point d'intersection (E) repose sur l'axe d'extrusion (EA), dans lequel la largeur (a) de l'ovale sur le premier axe de symétrie (SA1) est plus grande que la hauteur (b) de l'ovale sur le second axe de symétrie (SA2),
**caractérisé en ce que** la section transversale radiale en forme d'ovale présente un contour extérieur (AK) courbé convexe sur tout le pourtour,
dans lequel l'ovale comprend deux premiers arcs de cercle (KB1, KB1') symétriques au premier axe de symétrie (SA1) et deux seconds arcs de cercle (KB2, KB2') symétriques au second axe de symétrie (SA2), dans lequel le rayon (r1) des premiers arcs de cercle (KB1, KB1') repose sur le second axe de symétrie (SA2) et le rayon (r2) des seconds arcs de cercle (KB2, KB2') repose sur le premier axe de symétrie (SA1), et dans lequel le le rayon (r1) des premiers arcs de cercle (KB1, KB1') est plus grand que le rayon (r2) des seconds arcs de cercle (KB2, KB2'), dans lequel les quatre arcs de cercle (KB1, KB1', KB2, KB2') forment un ovale fermé, de sorte que les rayons (r1, r2) des arcs de cercle (KB1, KB1', KB2, KB2') reposent respectivement l'un sur l'autre sur leurs points de contact (KP), dans lequel l'angle g des rayons (r1, r2) des arcs de cercle (KB1, KB1', KB2, KB2') reposant l'un sur l'autre est respectivement entre 15° et 25° par rapport au second axe de symétrie (SA2).

2. Douille d'usure selon la revendication 1, dans lequel le second axe de symétrie (SA2) passe entre les deux canaux (K, K') de l'alésage jumelé (ZB).

3. Douille d'usure selon l'une des revendications précédentes, dans lequel le rapport de la largeur (a) de l'ovale à la hauteur (b) de l'ovale est entre 1,3 et 1,6.

4. Douille d'usure selon l'une des revendications précédentes, dans lequel le rapport du rayon (r1) des premiers arcs de cercle (KB1, KB1') au rayon (r2) des seconds arcs de cercle (KB2, KB2') est entre 2,3 et 3,5.

5. Douille d'usure selon l'une des revendications précédentes, dans lequel le rapport du rayon (r2) des seconds arcs de cercle (KB2, KB2') au rayon (r3) des canaux (K, K') de l'alésage jumelé (ZB) est entre 1,25 et 1,55.

6. Douille d'usure selon l'une des revendications précédentes, dans lequel les points médians (M2, M2') des seconds arcs de cercle (KB2, KB2') reposent sur les points médians (MK, MK') des canaux (K, K') de l'alésage jumelé (ZB).

7. Douille d'usure selon l'une des revendications précédentes, dans lequel l'ovale est une ellipse.

8. Douille d'usure selon l'une des revendications précédentes, dans lequel le cylindre (Z) présente une saillie radiale (V) sur une extrémité axiale.

9. Cylindre d'extrusion pour une extrudeuse à double-vis comprenant une douille d'usure selon l'une des revendications 1 à 8.

10. Extrudeuse à double-vis comprenant un cylindre d'extrusion selon la revendication 9.
